Europäisches Patentamt

European Patent Office

Office européen des brevets

(19)

(11) Numéro de publication : **0 084 389**
**B1**

(12) **FASCICULE DE BREVET EUROPÉEN**

(45) Date de publication du fascicule du brevet :
06.05.87

(51) Int. Cl.⁴ : **H 04 L   1/08**

(21) Numéro de dépôt : **83200016.0**

(22) Date de dépôt : **06.01.83**

(54) Dispositif de transmission de données et réseau de communications avec récupération préventive des erreurs.

(30) Priorité : **11.01.82 FR 8200285**

(43) Date de publication de la demande :
**27.07.83 Bulletin 83/30**

(45) Mention de la délivrance du brevet :
**06.05.87 Bulletin 87/19**

(84) Etats contractants désignés :
**DE FR GB IT SE**

(56) Documents cités :
**DE-B- 1 293 817**
**FR-A- 2 297 528**
**US-A- 3 760 371**

(73) Titulaire : **S.A. PHILIPS INDUSTRIELLE ET COMMER-CIALE**
**50 Avenue Montaigne**
**F-75008 Paris (FR)**
**FR**
**N.V. Philips' Gloeilampenfabrieken**
**Groenewoudseweg 1**
**NL-5621 BA Eindhoven (NL)**
**DE GB IT SE**

(72) Inventeur : **Segarra, Gérard**
**Société Civile S.P.I.D. 209, rue de l'Université**
**F-75007 Paris (FR)**

(74) Mandataire : **Pinchon, Pierre et al**
**Société Civile S.P.I.D. 209 rue de l'Université**
**F-75007 Paris (FR)**

## Description

La présente invention concerne un dispositif de transmission de données comportant au moins une station émettrice et au moins une station réceptrice, laquelle station émettrice comporte des moyens dont un compteur pour émettre d'un même message un nombre entier d'exemplaires, lesquels exemplaires étant émis consécutivement, lequel nombre entier étant indiqué par la position du compteur, laquelle station émettrice comporte aussi un codeur pour pourvoir chaque message à émettre d'un code de reconnaissance d'erreur, laquelle station réceptrice comporte un décodeur pour décoder les messages reçus ainsi que des moyens de prélèvement reliés audit décodeur pour ne prélever qu'un seul exemplaire parmi les exemplaires reçus d'un même message et ayant été décodé comme étant conforme à une norme donnée.

Un tel dispositif de transmission de données est décrit dans la demande de brevet allemande DE-AS-1 293 817. Lesdits moyens de la station émettrice comportent une mémoire et un compteur. Ce compteur indique une valeur « k » correspondant au nombre d'exemplaires à émettre consécutivement du même message. Le message à émettre est emmagasiné dans la mémoire. L'émission des « k » mêmes messages est réalisé par la lecture de « k » fois le contenu de la mémoire et en décrémentant d'une unité lors de chaque lecture le contenu du compteur. Lorsque « k » copies du même message ont été émises, un autre message est changé dans la mémoire et le compteur est réinitialisé à cette même valeur « k ». Cette valeur « k » doit selon la demande allemande citée, être au moins égale à deux. Les messages émis sont codés au moyen d'un codeur faisant partie de la station émettrice. La station réceptrice comporte un décodeur, capable de constater une erreur dans un message codé émis par la station émettrice. La station réceptrice comporte un registre et un circuit de connexion.

Le circuit de connexion a une première entrée reliée à une sortie du registre et une deuxième entrée reliée à une sortie du décodeur. Lorsque le décodeur a constaté que le message reçu est correct, il transmet un signal à ladite deuxième entrée du circuit de connexion. Sous le contrôle du signal émis par le décodeur, le circuit de connexion va connecter la sortie du registre dans lequel le message reçu est chargé, à une entrée d'une mémoire de la station réceptrice validant ainsi le message reçu. Si par contre, le décodeur a constaté un message erroné, il ne transmet pas de signal à la deuxième entrée du circuit de connexion. La station réceptrice ne prélève qu'un seul exemplaire des « k » exemplaires émis par la station émettrice.

L'inconvénient d'un tel dispositif de transmission de données est que le nombre d'exemplaires qui sont émis du même message ne peut varier. Indépendamment de l'importance fonctionnelle ou de la longueur du message, le dispositif envoie toujours un même nombre d'exemplaires. Plus particulièrement dans le cas où le dispositif de transmission de données est incorporé dans un réseau de communication de données, ceci peut occasionner une surcharge du réseau, qui à son tour réduira l'efficacité du réseau.

L'invention a pour but de réaliser un dispositif de transmission de données où le nombre d'exemplaires qui sera émis d'un même message peut varier d'un message à l'autre.

Un dispositif de transmission de données selon l'invention est particulièrement remarquable en ce que ledit compteur est un compteur positionnable en un nombre restreint de positions, lequel compteur comporte une entrée pour la réception d'un signal de positionnement positionnant ledit compteur, lequel signal de positionnement étant généré par la station émettrice lors de chaque émission d'un message et ayant une première valeur indiquant ledit nombre entier d'exemplaires à émettre.

Dû à l'emploi d'un compteur positionnable dans la station émettrice, le nombre d'exemplaires qui sera émis d'un même message peut varier d'un message à l'autre. La valeur à laquelle le compteur est positionné pour chaque message à émettre est déterminée par la station émettrice qui, pour réaliser cela, génère lors de chaque émission un signal de positionnement.

L'objectif recherché par l'émission consécutive de copies d'un même message est d'augmenter la probabilité du bon acheminement d'un message dans des proportions telles que le risque d'erreur puisse être considéré comme nul ; les dispositifs de récupération d'erreur deviennent ainsi superflus et peuvent être purement et simplement supprimés.

Un exemple chiffré fera mieux comprendre l'avantage de l'invention : pour un réseau de qualité courante, le taux d'erreur est de l'ordre de $10^{-8}$ par bit c'est-à-dire qu'il y aura 1 bit erroné à la réception pour $10^8$ bits envoyés à l'émission ; pour un message contenant $10^3$ bits — soit 125 octets — le taux d'erreur sera de $10^{-8} \times 10^3 = 10^{-5}$ ; si le même message est envoyé trois fois, la probabilité pour qu'aucune des trois copies ne soit bien réceptionnée sera alors de $10^{-5} \times 10^{-5} \times 10^{-5} = 10^{-15}$ et si l'on considère un réseau qui trafique à 10 M bits/seconde c'est-à-dire $10^7$ bits/secondes il faudra quelques $10^8$ secondes pour qu'une erreur ait une chance de se produire ($10^8$ sec $\times 10^7$ bits/sec $\times 10^{-15} = 1$) or $10^8$ sec = 1 150 jours = 3,15 années ; avec 4 copies à 100 M bits/seconde on aurait trouvé 31 500 ans.

La fiabilité recherchée peut varier d'un message à l'autre selon qu'il s'agit d'un message de commande, de synchronisation, de données, etc. la détermination du nombre d'exemplaires à émettre d'un même message est donc une tâche de la station émettrice qui pour cela prendra en compte divers paramètres.

Un dispositif de transmission de données selon l'invention est particulièrement remarquable en ce que la station émettrice comporte un élément de pondération ayant une sortie reliée à ladite entrée du compteur et une entrée pour la réception des messages à émettre, lequel élément de pondération étant équipé de premiers moyens pour subdiviser les messages à émettre en au moins deux types de messages et pour associer à chaque type de messages une dite première valeur du signal de positionnement.

Dû à l'emploi d'un élément de pondération, la station émettrice peut prendre en compte divers paramètres et subdiviser les messages en au moins deux types.

A chaque type de message sera associée une valeur qui indiquera le nombre d'exemplaires à émettre.

Une forme préférentielle d'un dispositif de transmission de données selon l'invention est particulièrement remarquable en ce que ladite subdivision en au moins deux types des messages à émettre est basée sur l'importance fonctionnelle du message.

En subdivisant les messages suivant leur importance fonctionnelle, l'on réalise que les messages primordiaux, par exemple des messages de contrôle de processus, sont émis en un plus grand nombre d'exemplaires que de messages d'une importance fonctionnelle moindre. Le risque que des messages primordiaux n'arrivent pas à destination est ainsi pratiquement nul.

Une autre forme préférentielle d'un dispositif de transmission de données selon l'invention, où chaque message à émettre comporte un nombre de bits, est caractérisé en ce que ladite subdivision en au moins deux types de messages à émettre est basée sur la longueur en nombre de bits du message.

La probabilité d'erreur d'un message long est supérieure à celle d'un message court. En prenant en compte la longueur du message, l'on peut varier le nombre d'exemplaires à émettre en fonction de cette longueur et ainsi réduire la probabilité d'erreur dans la transmission des messages.

Dans une forme préférentielle, un dispositif de transmission de données selon l'invention est caractérisé en ce que à chaque exemplaire du même message à émettre, une indication est adjointe, lesquelles indications forment une série composée d'au moins une première et une seconde indications différentes entre elles, dont une première indication est adjointe uniquement au premier exemplaire dudit nombre d'exemplaires, laquelle première indication indique le premier exemplaire dudit nombre, et dont une seconde indication est adjointe uniquement au dernier exemplaire dudit nombre d'exemplaires, laquelle seconde indication indique le dernier exemplaire dudit nombre. L'adjonction d'une indication particulière au premier et au dernier exemplaire dudit nombre permet à la station réceptrice de reconnaître qu'il s'agit soit du premier, soit du dernier exemplaire.

De préférence, un dispositif de transmission de données selon l'invention est caractérisé en ce que ladite indication comporte un numéro d'exemplaire et que ladite série est composée d'autant d'éléments que ledit nombre entier (n) d'exemplaires à émettre, ladite station réceptrice comportant une table pour la prise en compte des différents numéros.

L'on peut ainsi numéroter chaque exemplaire du message avec son propre numéro. Ceci offre aussi à la station réceptrice la possibilité de connaître à quel nombre d'exemplaires le message a été émis et d'en tenir compte.

Il est favorable qu'un dispositif de transmission de données selon l'invention soit caractérisé en ce que lesdits exemplaires du même message à émettre sont numérotés en ordre décroissant, le dernier exemplaire ayant le numéro le plus inférieur, ladite station réceptrice étant équipée d'un élément pour la détection du numéro le plus inférieur, lequel élément étant relié à ladite table. L'implémentation de la station réceptrice devient ainsi relativement simple.

L'invention s'applique de préférence à un réseau de communications de données comportant des stations à la fois émettrices et réceptrices, lesquelles stations étant chacune connectées à un canal pour le transit de données, utilisant un dispositif de transmission de données selon l'invention. Un réseau de communications de données selon l'invention est particulièrement remarquable en ce que chaque station réceptrice comporte un élément de comptage de qualité du réseau pour déterminer une seconde valeur indiquant le nombre de bon et/ou mauvais exemplaires d'un même message reçu, lequel élément de comptage ayant une entrée connectée à une sortie dudit décodeur.

Dû au fait que les stations sont à la fois émettrices et réceptrices, chaque station peut avec son élément de comptage de qualité du réseau compter parmi les exemplaires reçus d'un même message, le nombre de bon et/ou mauvais exemplaires déterminé en fonction du décodage.

Un réseau de communications de données selon l'invention est particulièrement remarquable en ce que chaque station émettrice comporte un élément de pondération ayant une sortie reliée à ladite entrée du compteur et une entrée reliée à une sortie dudit élément de comptage de qualité du réseau pour la réception de ladite seconde valeur du nombre de bon et/ou mauvais exemplaires, lequel élément de pondération étant équipé de seconds moyens pour déterminer sur base de ladite seconde valeur pour chaque message à émettre un taux d'erreur du réseau et en déduire ladite première valeur du signal de positionnement.

Le nombre de bons et/ou mauvais exemplaires d'un même message permet d'en déduire une valeur pour la qualité du réseau. Cette qualité du réseau peut varier en fonction du temps et des lieux. L'élément de pondération peut ainsi tenir compte de cette valeur variable de la qualité du réseau en déterminer un taux d'erreur et faire varier le nombre d'exemplaires à émettre en fonction de ce taux d'erreur variable.

Dans une forme préférentielle, un réseau de communications de données selon l'invention est caractérisé en ce que ledit nombre entier d'exemplaires est inférieur ou égal à dix.

L'on évite ainsi une surcharge du réseau.

L'invention sera maintenant décrite au moyen des figures suivantes dans lesquelles :
La figure 1 représente un exemple d'une station émettrice selon l'invention.
La figure 2 explicite l'émission d'un nombre d'exemplaires d'un même message.
La figure 3 représente un exemple d'une station réceptrice selon l'invention.
La figure 4 explicite la réception des exemplaires du même message.
La figure 5 explicite la détermination du taux d'erreur du réseau.

L'invention sera décrite en se référant à un exemple dans lequel le dispositif de transmission de données fait partie d'un réseau de communications de données comportant une pluralité de stations à la fois émettrices et réceptrices. Les stations sont chacunes connectées à un canal pour le transit des données en particulier des données sous forme de messages. Le canal pour le transit de données est constitué d'un réseau de câbles coaxiaux ou de fibres optiques ou d'un autre moyen de transport de données à onde porteuse, par exemple des ondes radio.

Avant de décrire les figures, examinons la structure de la trame d'un message de type courant. Le message comporte différents champs, entre autres.

| PRE | DA | SA | CDE | INFO | FCS |
|-----|----|----|-----|------|-----|

La partie PRE est le préambule qui comporte généralement 1 ou des bits de synchronisation et d'autres bits utilisés pour des vérifications physiques de la qualité du message, par exemple le contrôle automatique de gain nécessaire en fonction de la puissance électrique du message reçu.

La partie DA contient l'adresse de destination du message dont au moins 1 bit indique si le message est en mode adressé (une seule station destinatrice) ou en mode diffusé (plusieurs stations destinatrices) ; les autres bits sont soit le numéro d'une station en mode adressé, soit en mode diffusé le numéro d'une fonction connue de chaque station connectée à cette même fonction.

La partie SA comporte l'adresse de la station émettrice du message.

La partie CDE, la plus spécifique à l'invention, contient le numéro de la copie d'un même message dupliqué. Ainsi, un même message émis plusieurs fois consécutivement comportera son propre numéro de copie ; ces numéros peuvent être par exemple en ordre décroissant dans le temps $n - 1, n + 2, ..., 1, 0$, si l'on expédie « n » exemplaires du message. La partie CDE peut aussi par exemple contenir une première indication adjointe au premier exemplaire uniquement et une seconde indication adjointe au dernier exemplaire uniquement. La partie CDE peut aussi contenir le nombre total d'exemplaires du même message et le numéro de copie, par exemple dans le cas où les exemplaires seraient numérotés en ordre croissant.

La partie INFO contient le message proprement dit : commandes, contrôles, données, etc.

La partie FCS contient des bits de contrôle qui permettent une vérification de la transmission physique par un procédé connu par exemple division de la trame par un polynôme générateur, voir à ce sujet par exemple, le livre Orange Tome VIII.2 du CCITT dont en particulier le paragraphe 2.2.7.

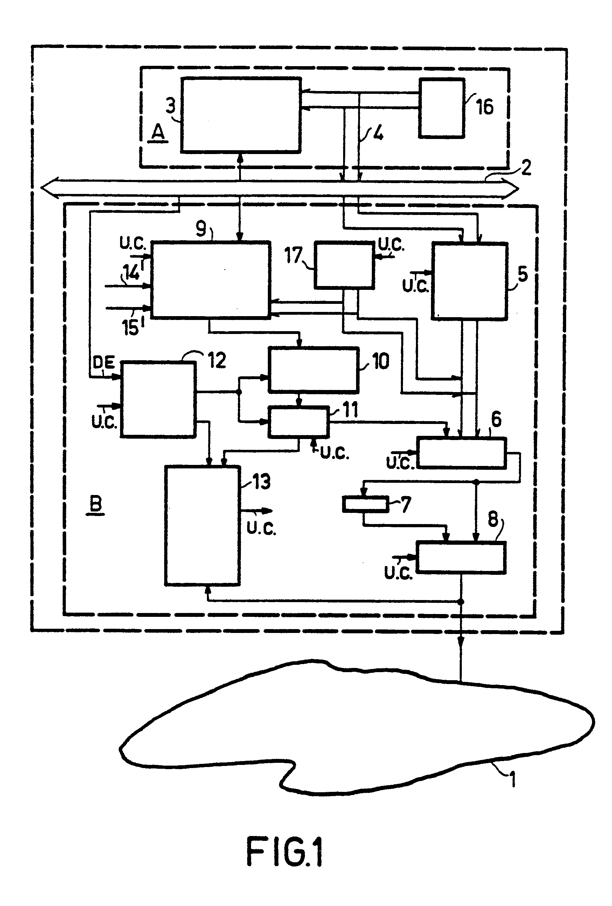

La figure 1 représente un exemple d'un automate d'émission d'une station émettrice selon l'invention. L'automate d'émission communique via un multiplexeur 8 avec le canal 1 où transitent les données. L'automate d'émission possède une architecture en couches, voir à ce sujet par exemple, la demande de brevet français n° 2 472 234. Pour la description de l'invention, l'on prend en compte parmi les différentes couches de la station, la couche d'application A, appelée aussi couche supérieure et la couche de communication B. L'échange d'information entre la couche d'application et la couche de communication s'effectue au moyen d'un bus interne 2. La figure 1 ne montre que le éléments d'une station émettrice nécessaires à la compréhension de l'invention. La couche d'application comporte entre autre une source de données 16 et une unité de traitement de données 5 par exemple un microprocesseur. La source de données et l'unité de traitement de données sont reliées par une ligne de communication 4, par exemple un bus. La ligne de communication 4 est aussi reliée au bus interne 2.

La source de données 16 charge via la ligne de communication 4 et le bus interne les champs SA, DA, INFO d'un message à émettre dans une mémoire vive 5. Cette mémoire vive 5 fait partie de la couche de communication B. Comme son nom l'indique cette couche de communication a pour tâche d'organiser la communication entre la station émettrice et le réseau. Une sortie de données de la mémoire vive 5 est connectée à une première entrée d'un convertisseur parallèle série registre à décalage 6 dont une seconde entrée est connectée à une sortie d'un compteur 11. Une sortie du registre à décalage 6 est connectée d'une part à une première entrée d'un multiplexeur 8 et d'autre part à une entrée d'un codeur 7 lequel codeur a une sortie connectée à une deuxième entrée du multiplexeur 8. Le multiplexeur 8 bâtit la trame avec ses divers champs dont le champ de contrôle FCS qui est élaboré par le codeur 7. La couche de communication comporte aussi une unité de traitement de données 9 par exemple un microprocesseur, dont une sortie est connectée à une entrée d'adresse d'une mémoire 10, par exemple une mémoire morte (ROM) ou une mémoire programmable (PROM). La couche de communication comporte aussi un générateur de messages de gestion 17. Une sortie de données de cette mémoire 10 est connectée à une première entrée du compteur 11.

Le fonctionnement des unités de traitement 9 et 5 ainsi que de la mémoire 10, du compteur 19 et du générateur de messages de gestion 17 seront décrits ci-dessous.

La couche de communication comporte encore un automate d'état 12 ayant une entrée connectée au bus interne 2 pour la transmission d'un signal de demande d'émission DE. La couche de communication comporte aussi un contrôleur microprogrammé 13 qui, le cas échéant, peut être le même élément que l'unité de traitement de données 9.

Le contrôleur microprogrammé 13 reçoit des informations à partir de l'automate d'état 12, du compteur 11 et du canal 1 dans lequel des messages spécifiques signalent à quel moment le canal est alloué à la station, pour émettre.

Le contrôleur microprogrammé 13 envoie des microcommandes U.C. aux différents composants du système (indiquées dans les figures au moyen de flèches U.C.).

Les composants utilisés peuvent être par exemple :
pour le compteur 11, un 74 LS 193 de chez Signetics
pour la mémoire 5, un μPD 2167 de chez NEC
pour le registre 6, un 74 LS 165 de chez Signetics
pour le codeur 7, un 8 X 01 de chez Signetics
pour le multiplexeur 8, un 74 LS 157 de chez Signetics
pour l'automate d'état 12, un 82 S 100 de chez Signetics
pour les unités 13, 9 et 5, des 82 S 100, 82 S 137 et 74 LS 374 de chez Signetics
pour la mémoire 10, une 2716 de chez Intel.

Le rôle de l'automate d'émission d'une station émettrice sera maintenant d'émettre consécutivement autant d'exemplaires d'un même message qu'indiqué par le compteur 11 et de les numéroter en ordre décroissant. La façon dont est déterminé le nombre d'exemplaires à émettre pour chaque message, c'est-à-dire le positionnement du compteur 11 sera décrit ci-dessous car cela nécessite une compréhension de la façon dont un message est reçu par une station réceptrice.

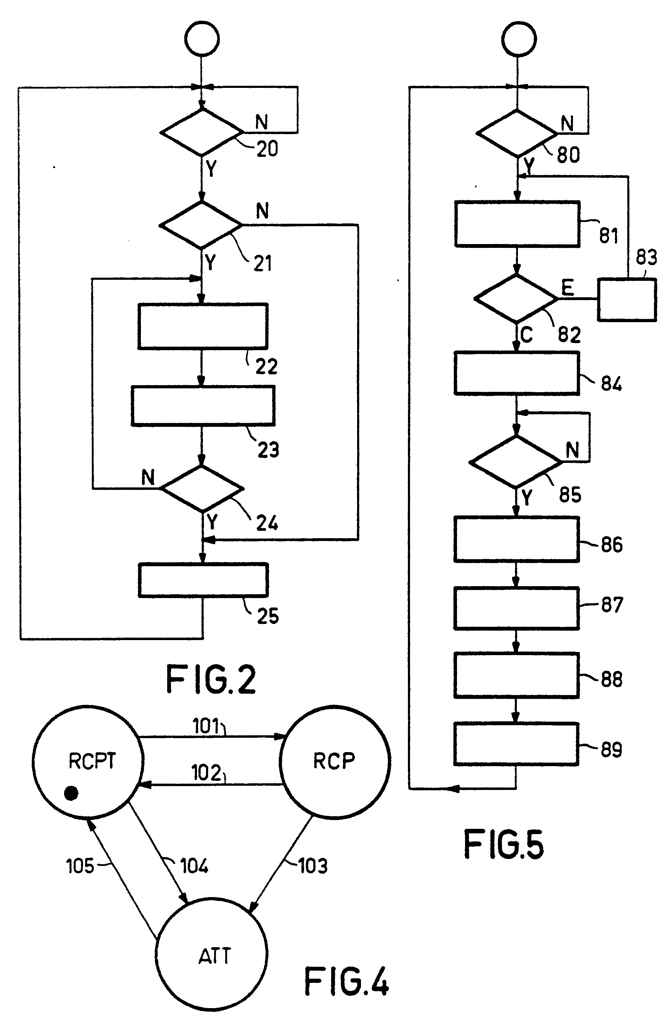

La figure 2 montre un exemple au moyen d'un diagramme, du fonctionnement de l'automate d'émission selon la figure 1, pour l'émission d'un nombre entier « n » (n ≥ 1) d'exemplaires d'un même message.

Le test (20) répond à la question : le canal est-il alloué à la station ? L'automate de la station est en attente d'allocation. Cette allocation peut être réalisée selon différentes façons en fonction du type de réseau. L'article de M. Michel Martin paru dans ZERO UN Informatique N° 146, Décembre 1980-Janvier 1981 page 78 à 82 donne un aperçu de ces différentes façons. Il est évident que la question de l'allocation du canal joue uniquement un rôle dans les réseaux où l'accès au canal est basé sur un « droit à émettre ». Dans un réseau où d'autres règles d'accès sont valables, par exemple le réseau CSMACD (Carrier Sense Multiple Access with Collision Detection) aussi connu que sous le nom d'Ethernet, cette question (20) n'est pas posée ou est posée sous une forme différente. Il sera évident que l'invention n'est pas limitée au réseau où l'accès au canal est basé sur un « droit à émettre » et que la figure 2 ne donne qu'une forme préférentielle du fonctionnement de l'automate d'émission. Lorsque la réponse est OUI, le test (21) répond à la question : y a-t-il eu une demande d'émission de la part de la couche supérieure ? signal DE présenté à l'automate d'état. Si la réponse est NON, l'allocation est abandonnée (25) au profit d'une autre station ; si la réponse est OUI, l'automate exécute l'émission des « n » messages demandés, le rôle du multiplexeur 8 étant de concaténer les différents champs du message comme susdit ; le premier message est émis avec le champ CDE à sa valeur initiale c'est-à-dire à la valeur à laquelle le compteur 11 a été positionné : EM — CDE (22), le compteur 11 est alors décrémenté de 1(23) : (CDE) = (CDE) — 1 ; le dit compteur est alors testé (24) à la valeur (CDE = — 1 ?) ; si la réponse est NON, le message est ré-émis avec la nouvelle valeur du compteur ; si la réponse est OUI, ce qui signifie que le dernier message envoyé comportait un champ CDE égal à 0, donc qu'il s'agissait du dernier des « n » exemplaires du message à émettre, l'allocation du canal est abandonnée (25).

On voit bien ainsi comment l'automate d'émission est spécialement conçu pour émettre consécutivement « n » copies d'un message, chaque exemplaire, comportant son propre numéro de copie, étant numéroté de n-1 à 0 en ordre décroissant.

Sans sortir du cadre de l'invention, il est possible de numéroter les copies en ordre croissant et d'indiquer le nombre total de copies. Le dernier exemplaire porte alors un numéro qui est égal au nombre total indiqué et peut ainsi être reconnu comme étant le dernier exemplaire des « n » exemplaires du message émis. Il est aussi possible d'envoyer plusieurs messages, chacun avec un nombre de copies qui lui serait propre, avant d'abandonner l'allocation du canal mais encore faut-il que le principe de fonctionnement du réseau soit compatible avec cette possibilité.

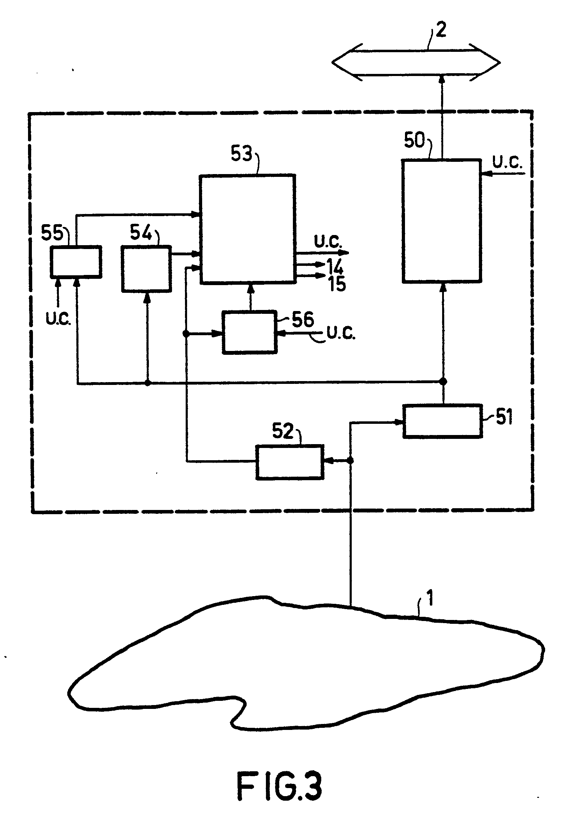

L'automate de réception couche de communication d'une station réceptrice selon l'invention est représenté à la figure 3. L'automate de réception de la figure 3 et l'automate d'émission présenté dans la figure 1 font en général partie de la même station connectée au réseau de communication. Dès lors, certains éléments peuvent être communs au deux automates suivant la réalisation choisie. Les messages transitant dans le canal 1 arrivent dans la file d'attente d'entrée d'un registre du type FIFO (first in first out) 50 *via* un convertisseur série parallèle registre à décalage 51. La partie FCS de chaque exemplaire d'un message est prélevée et contrôlée par le décodeur 52. le décodeur 52 vérifie si l'exemplaire du message reçu est conforme à une norme donnée. Une réalisation d'un décodeur 52 consiste par exemple à utiliser le codeur 7 (figure 1 automate d'émission) et à élaborer le contenu de ce champ de contrôle FCS à partir de l'exemplaire du message reçu, puis de comparer le contenu de ce champ FCS à ladite partie FCS prélevée dans l'exemplaire reçu. Si le résultat de cette comparaison est positif (champs FCS égaux) c'est que l'exemplaire a été bien reçu (message bon). Si le résultat de cette comparaison est négatif (champs FCS inégaux) c'est qu'il s'agit d'un exemplaire erroné (message mauvais). Cette information message bon ou message mauvais est envoyée à un automate d'état 53 (le cas échéant cet automate peut être le même que l'automate 12 de la figure 1).

L'automate d'état 53 reçoit aussi des signaux venant premièrement d'un décodeur 54 du champ d'adresse de destination DA ce qui permet, entre autres, de savoir si la station est destinatrice du message reçu et s'il y eu un changement d'allocation, et deuxièmement d'un compteur 55 dont un signal indique son passage par la valeur 0 ; l'automate d'état prend en compte ces diverses informations et génère des micro-commandes (U.C.) qui font évoluer la station entre les divers états représentés dans la figure 4. Les composants utilisés pour l'automate de la station réceptrice peuvent être par exemple :

pour le registre FIFO un Z 8060 de chez Zilog
pour l'automate d'état 53 un 82 S 100 de chez Signetics
pour le registre 51 un 74 LS 164 de chez Signetics
pour le décodeur 52 un 8 X 01 de chez Signetics
pour le décodeur d'adresse 54 un 82 S 100 de chez Signetics
pour le compteur 55 un 74 LS 193 de chez Signetics.

La figure 4 illustre le fonctionnement de l'automate de réception. L'état stable initial est l'état de réception RCPT ; quand un message correct (message bon) est reçu, celui-ci est validé pour la couche supérieure si la station est destinatrice (DA adéquat). Le message sera alors prélevé du registre FIFO 50 et expédié vers la couche supérieure, à la demande de celle-ci, via le bus interne 2. Si le dit message bon possède un numéro d'exemplaire égal à zéro, il n'y a pas de copie du dit message, l'automate reste alors dans l'état RCPT en vue du prochain message. Par contre, si le numéro d'exemplaire est différent de zéro, les copies qui vont suivre n'ont pas d'intérêt pour la station, le compteur 55 est chargé avec ce numéro d'exemplaire et l'automate passe (104) dans l'état d'attente ATT. Dans cet état, l'automate d'état 53 décrémente de 1 le compteur CE à chaque exemplaire, bon ou mauvais, reçu ; ainsi la station attend la fin des copies pour revenir à l'état RCPT ; ce passage (105) s'effectue lorsqu'un message bon avec le n° 0 — le dernier — est détecté, ou lorsque le compteur 55 est arrivé à zéro lors du décompte des copies à partir du numéro de l'exemplaire correctement reçu, ou encore lorsque le décodeur 54 a détecté un changement d'allocation. Ces différentes conditions pour le passage (105) sont éventuellement redondantes ce qui introduit un certain niveau de sécurité au cas où des copies seraient reçues d'une manière erronée. On voit en effet qu'il suffit qu'un seul exemplaire soit bien reçu pour que le message soit validé pour la couche supérieure.

Revenons à l'état initial RCPT et supposons qu'un message erroné (message mauvais) soit reçu, l'automate passe (101) alors en état de récupération RCP dans l'espoir que ce message soit suivi de copies dont l'une au moins pourra être bien réceptionnée. Si l'automate détecte alors un message bon avec un numéro de copie différent de zéro, le message est validé et, comme précédemment, le numéro de copie est chargé dans le compteur 55 et on passe (103) en état d'attente (ATT) pour ignorer les copies suivantes. Si l'automate en état de récupération reçoit un message bon avec le numéro zéro, il revient (102) en état de réception ; si l'automate en état de récupération reçoit un message mauvais, il reste en état de récupération. Enfin si l'automate en état de récupération détecte un changement d'allocation alors il revient (102) en état de réception en sachant qu'un message a été perdu. Cette dernière éventualité peut le cas échéant, être relativement sans importance. C'est par exemple le cas lorsqu'il s'agit d'un message non destiné à la station. S'il s'agit d'un message destiné à la station, il peut s'agir soit d'un message non dupliqué c'est-à-dire non primordial soit d'un message émis en mode diffusé et alors il y a une forte chance que le message a été bien reçu par une autre station. Dans certains cas, il peut aussi s'agir d'un message dupliqué avec un taux d'erreur connu et déterminé par la station émettrice du message, c'est-à-dire avec un risque connu et accepté.

La détermination du taux d'erreur par la station émettrice lors de l'émission d'un message sera maintenant décrite en se référant aux figures 1 et 3. C'est sur base de ce taux d'erreur que la station émettrice déterminera le nombre d'exemplaires à émettre d'un même message, et positionnera le compteur audit nombre.

La détermination du taux d'erreur et donc du nombre d'exemplaires à émettre est faite en fonction de divers paramètres à savoir

a) la fiabilité du réseau
b) l'importance fonctionnelle du message
c) la longueur du message.

Il est évident que ces divers paramètres peuvent varier d'un message à l'autre et qu'il est donc important de déterminer ce taux d'erreur pour chaque message à émettre.

La détermination du taux d'erreur en fonction de ces divers paramètres sera décrite maintenant

a) la fiabilité du réseau

Chaque réseau a un taux d'erreur spécifique déterminé par la qualité physique du réseau. Par exemple, dans le cas où les différentes stations sont reliées par un câble coaxial c'est la qualité physique de câble qui détermine le taux d'erreur. Le taux d'erreur du réseau (TER) peut être exprimé comme suit

TERM = nombre de messages perdus/nombre de messages émis

ou encore

TERB = nombre de bits perdus/nombre de bits émis

Une valeur couramment admise pour TER est $10^{-8}$ ; le taux d'erreur du réseau peut être localement inférieur à cette valeur, par exemple dû à des perturbations locales suites à la présence de sources parasitaires (par exemple un moteur mis temporairement en route). Il est donc primordial de déterminer pour chaque message à émettre le taux d'erreur du réseau afin de prendre en compte les effets de ces perturbations locales. Pour réaliser cela, l'invention exploite le fait que la couche de communication de chaque station prend en compte tous les messages qui transitent sur le canal, indifféremment qu'elle soit destinatrice ou non. Comme décrit lors de la description des figures 3 et 4, le décodeur 52 vérifie sur base du champ FCS si l'exemplaire du message reçu est conforme, et le compteur 55 est chargé avec le numéro de l'exemplaire reçu. Ce numéro d'exemplaire sera aussi pris en compte par l'automate d'état 53. L'automate de réception illustré dans la figure 3 comporte aussi un autre compteur, notamment le compteur 56 dont une entrée est connectée à une sortie du décodeur 52. Le compteur 56 compte le nombre d'exemplaires d'un message qui ont été décodés comme étant un bon message.

Le diagramme de la figure 5 illustre une forme préférentielle de la façon dont le taux d'erreur du réseau est déterminé par l'automate d'état 53 de la station réceptrice.

Dans l'exemple choisi, il est supposé que chaque station allouée, par exemple par un jeton qui circule sur le canal, émet un message même au cas où elle n'aurait pas de message à émettre, elle émettrait alors un message indiquant qu'elle n'a rien à émettre.

Le test 80 répond à la question : Y a-t-il une indication dans l'information qui circule sur le canal et qui est prise en compte par la station réceptrice que cette information concerne un nouveau message qui comporte un ou oplusieurs exemplaires ? Cette indication est par exemple donnée par un jeton (token) qui circule sur le canal et qui distribue le droit à émettre aux différentes stations (allocation). Si la réponse à la question du test 80 est non (N), l'automate d'état reste en attente d'allocation. Si par contre la réponse est oui, le compteur 56 est remis à zéro (81). Le test 82 vérifie si un numéro d'exemplaire est chargé dans le compteur 55 et dans l'automate d'état 53. Le test 82 vérifie aussi si entre temps il n'y a pas eu une allocation à une autre station du réseau, si tel est le cas et que le compteur 55 n'a pas été positionné, cela signifie qu'il n'y a eu aucun bon message entre ces deux allocations (E). Cette dernière information est alors délivrée (83) à la sortie 15 de l'automate d'état 53. Cette information est par exemple exprimée comme suit :

CB = nombre d'exemplaires bons/nombre d'exemplaires reçus

(délivré à la sortie 14)

CM = nombre d'exemplaires mauvais/nombre d'exemplaires reçus

(délivré à la sortie 15)

Dans le cas où tous les exemplaires étaient mauvais, CM est d'office positionné égal à 1 (CM = 1) et CB = 0. Si par contre (C) le numéro « n » d'exemplaires a été chargé dans le compteur 55 et dans l'automate d'état 53, ce dernier mémorise (84), par exemple dans un registre interne, ce numéro d'exemplaire. Comme dans la forme préférentielle de l'invention les messages sont numérotés en ordre décroissant, ce numéro indiquera donc le nombre d'exemplaires émis d'un même message.

Le test 85 vérifie si le compteur 55 est arrivé à zéro (dernier message détecté), et aussi, si entre temps il n'y a pas eu une allocation à une autre station du réseau. Si tel n'est pas le cas (N) l'automate d'état 53 attend l'un de ces dits événements. Si par contre (Y) le compteur 55 est arrivé à zéro ou qu'une allocation à une autre station a eu lieu, le contenu du registre interne où ledit numéro « n » a été mémorisé (étape 84) est prélevé (86). Ensuite (87) la position du compteur 56 est prélevée. Ce compteur 56 indique le nombre de bons exemplaires reçus du message. Sur base de la valeur de « n » et de la valeur indiquée par le compteur 56, l'automate d'état 53 détermine alors (88) les valeurs CB et CM. La valeur CB, respectivement CM, est alors présentée (89) à la sortie 14, respectivement 15, de l'automate d'état 53. Le procédé est ensuite repris à partir du test 80.

La sortie 14 respectivement 15 de l'automate d'état 53 est connectée à l'entrée 14' respectivement 15' de l'unité de traitement de données 9 de la couche de communication de la station émettrice (figure 1). L'unité de traitement de données 9 prend en compte les valeurs CB et CM pour déterminer le taux d'erreur momentané du réseau. L'unité de traitement de données 9 prend en compte encore d'autres paramètres pour déterminer le taux d'erreur du réseau. Ces autres paramètres seront décrits par la suite.

Sur base de ce taux d'erreur qu'elle a déterminé l'unité de traitement de données va générer une adresse pour adresser la mémoire 10.

A chaque adresse de cette mémoire 10 est emmagasinée une valeur qui indique le nombre « n » d'exemplaires à émettre d'un même message. Cette mémoire a une capacité d'emmagasinage réduite ; en effet de préférence ledit nombre « n » est inférieur ou égal à dix ($1 \leqslant n \leqslant 10$), car cela n'aurait aucun sens d'émettre plus de dix exemplaires d'un même message et cela surchargerait trop le réseau qui deviendrait ainsi inefficace. Par ailleurs, le fait d'émettre plus de dix exemplaires d'un même message indique déjà que le réseau doit être fortement perturbé, et dans ce cas l'émission de plus de dix exemplaires n'aurait de toute façon aucun sens. Lors de l'émission d'un message le compteur 11 est alors positionné à la valeur adressée dans la mémoire 10. Ce positionnement est effectué sous contrôle de l'automate d'état 12 et du contrôleur microprogrammé 13.

b) L'importance fonctionnelle du message

L'on distingue ici deux types de messages.

1) messages qui concernent la gestion du réseau.

Ces messages sont en général générés par la couche de communication. Ce sont par exemple des messages de synchronisation ou des messages de contrôle.

2) messages comportant de l'information en provenance de la couche d'application.

La station émettrice fournira pour chaque message à émettre un taux d'erreur acceptable (TEA). Le TEA peut être exprimé comme suit :

TEAM = nombre de messages perdus/nombre de messages émis

ou

TEAB = nombre de bits perdus/nombre de bits émis

La valeur de TEA sera exprimée en fonction du résultat du contrôle du FCS. La valeur du taux d'erreur acceptable sera déterminée suivant le type du message.

1) Pour les messages de gestion du réseau le TEA sera déterminé par l'unité de traitement de données 9 de la couche de communication. Pour cela l'unité de traitement de données 9 a une entrée de données reliée à une sortie de données d'un générateur de messages de gestion 17 de la couche de communication. Le contenu de ces messages de gestion est analysé par l'unité de traitement de données 9 qui en déduit une valeur TEA. Cette valeur TEA est à son tour pondérée par les valeurs CB, CM mentionnées ci-dessus. L'analyse de ces messages de gestion est par exemple effectuée selon des critères prédéterminés, par exemple TEAM = $10^{-4}$ pour un message de synchronisation.
Sur base des valeurs TEA, CB, CM le taux d'erreur est alors déterminé.

2) Pour les messages en provenance de la couche d'application le TEA sera déterminé par l'unité de traitement de données 5 de cette couche d'application. Le contenu de ces messages est analysé par l'unité de traitement de données 5. Par exemple s'il s'agit d'un message de contrôle de processus dont il est primordial qu'il soit émis et reçu au bon moment, l'unité de traitement de données déterminera une valeur TEA = $10^{-6}$. Par contre, s'il s'agit d'un message d'information bureautique qui n'est pas primordial, le TEA = $10^{-3}$.
Afin de vérifier si la valeur TEA déterminée par l'unité de traitement de données 5 est compatible avec le taux d'erreur du réseau, cette valeur TEA est présentée à une entrée de l'unité de traitement de données 9. Si la valeur TEA est compatible avec le taux d'erreur du réseau, l'unité de traitement de données déterminera sur base de cette valeur TEA et des valeurs CB, CM, une adresse pour la mémoire 10. Si par contre la valeur TEA n'est pas compatible avec le taux d'erreur du réseau l'unité de traitement de données en avise la couche d'application et peut, le cas échéant, réduire cette valeur à la valeur maximale d'erreur du réseau ($10^{-8}$).

c) La longueur du message

Le taux d'erreur variera aussi en fonction de la longueur du message. La probabilité qu'un message long soit erroné est supérieure à celle d'un message court. Il est évident que plus un message comptera de bit plus la chance est grande qu'il y en ait au moins un qui soit erroné. Une station émettrice, selon l'invention prendra en compte la longueur du message lors de la détermination du taux d'erreur et donc du nombre d'exemplaires à émettre d'un même message. Suivant des critères prédéterminés, l'unité de traitement de données 5 de la couche d'application déterminera le TEA en fonction de la longueur du message. Optionnellement, l'unité de traitement de données 9 de la couche de communication peut aussi prendre en compte, pour déterminer le TEA, la longueur des messages de gestion. Mais comme ces messages de gestion sont en général des messages courts cela peut s'avérer une opération redondante.

Dans une phase d'initialisation, c'est-à-dire lors d'une mise en marche ou d'un branchement d'une station au réseau, la station émettrice peut pour l'émission du premier message déterminer arbitrairement un taux d'erreur. Par exemple mettre le taux d'erreur égal au taux maximal du réseau TER = $10^{-8}$.

## Revendications

1. Dispositif de transmission de données comportant au moins une station émettrice et au moins une station réceptrice laquelle station émettrice comporte des moyens dont un compteur pour émettre d'un même message un nombre entier d'exemplaires, lesquels exemplaires étant émis consécutivement lequel nombre entier étant indiqué par la position du compteur, laquelle station émettrice comporte aussi un codeur pour pouvoir chaque message à émettre d'un code de reconnaissance d'erreur, laquelle station réceptrice comporte un décodeur pour décoder les messages reçus ainsi que des moyens de prélèvement reliés audit décodeur pour ne prélever qu'un seul exemplaire parmi les exemplaires reçus d'un même message et ayant été décodé comme étant conforme à une norme donnée, caractérisé en ce que ledit compteur est un compteur positionnable en un nombre restreint de positions, lequel compteur comporte une entrée pour la réception d'un signal de positionnement positionnant ledit compteur, lequel signal de positionnement étant généré par la station émettrice lors de chaque émission d'un message et ayant une première valeur indiquant ledit nombre entier d'exemplaires à émettre.

2. Dispositif de transmission de données selon la première revendication, caractérisé en ce que la station émettrice comporte un élément de pondération ayant une sortie reliée à ladite entrée du compteur et une entrée pour la réception des messages à émettre, lequel élément de pondération étant équipé de premiers moyens pour subdiviser les messages à émettre en au moins deux types de messages et pour associer à chaque type de messages une dite première valeur du signal de positionnement.

3. Dispositif de transmission de données selon la seconde revendication, caractérisé en ce que ladite subdivision en au moins deux types des messages à émettre est basée sur l'importance fonctionnelle du message.

4. Dispositif de transmission de données selon la seconde revendication, où chaque message à émettre comporte un nombre de bits, caractérisé en ce que ladite subdivision en au moins deux types de messages à émettre est basée sur la longueur en nombre de bits du message.

5. Dispositif de transmission de données selon l'une quelconque des revendications précédentes caractérisé en ce que à chaque exemplaire du même message à émettre une indication est adjointe, lesquelles indications forment une série composée d'au moins une première et une seconde indications différentes entre elles, dont une première indication est adjointe uniquement au premier exemplaire dudit nombre d'exemplaires, laquelle première indication indique le premier exemplaire dudit nombre, et dont une seconde indication est adjointe uniquement au dernier exemplaire dudit nombre d'exemplaires, laquelle seconde indication indique le dernier exemplaire dudit nombre.

6. Dispositif de transmission de données selon la revendication 5, caractérisé en ce que ladite indication comporte un numéro d'exemplaire et que ladite série est composée d'autant d'éléments que ledit nombre entier « n » d'exemplaires à émettre, ladite station réceptrice comportant une table pour la prise en compte des différents numéros.

7. Dispositif de transmission de données selon la revendication 6, caractérisé en ce que lesdits exemplaires du même message à émettre sont numérotés en ordre décroissant, le dernier exemplaire ayant le numéro le plus inférieur, ladite station réceptrice étant équipée d'un élément pour la détection du numéro le plus inférieur, lequel élément étant relié à ladite table.

8. Réseau de communication de données comportant des stations à la fois émettrices et réceptrices lesquelles stations étant chacune connectées à un canal pour le transit de données, utilisant un dispositif de transmission de données selon l'une quelconque des revendications précédentes.

9. Réseau de communication de données selon la revendication 8, caractérisé en ce que chaque station réceptrice comporte un élément de comptage de qualité du réseau pour déterminer une seconde valeur indiquant le nombre de bons et/ou mauvais exemplaires d'un même message reçu, lequel élément de comptage ayant une entrée connectée à une sortie dudit décodeur.

10. Réseau de communication de données selon la revendication 9, caractérisé en ce que chaque station émettrice comporte un élément de pondération ayant une sortie reliée à ladite entrée du compteur et une entrée reliée à une sortie dudit élément de comptage de qualité du réseau pour la réception de ladite seconde valeur du nombre de bons et/ou mauvais exemplaires, lequel élément de pondération étant équipé de seconds moyens pour déterminer sur base de ladite seconde valeur pour chaque message à émettre un taux d'erreur du réseau et en déduire ladite première valeur du signal de positionnement.

11. Réseau de communication de données selon l'une quelconque des revendications 8, 9 ou 10, caractérisé en ce que ledit nombre entier d'exemplaires est inférieur ou égal à dix.

## Claims

1. A data transmission device comprising at least one transmitting station and at least one receiving station, said transmitting station comprising means which include a counter for transmitting an integer number of copies of the same message, said copies being consecutively transmitted, said integer number being indicated by the position of the counter, said transmitting station also comprising an encoder for providing each message to be transmitted with an error recognition code, said receiving station comprising a decoder for decoding the messages received as well as fetching means which are connected to said decoder in order to fetch only a single copy from the copies of the same message received which have been decoded as being in conformity with a given standard, characterized in that said counter is an adjustable counter having a limited number of positions and comprising an input for receiving an adjustment signal for the adjustment of the counter, said adjustment signal being generated by the transmitting station for each transmission of a message and having a first value which indicates said integer number of copies to be transmitted.

2. A data transmission device as claimed in the first Claim, characterized in that the transmitting station comprises a weighting element which comprises an output which is connected to said input of the counter and an input for receiving messages to be transmitted, said weighting element comprising first means for subdividing the messages to be transmitted into at least two types of messages and for associating a said first value of the adjustment signal with each type of message.

3. A data transmission device as claimed in the second Claim, characterized in that said subdivision into at least two types of messages to be transmitted is based on the functional importance of the message.

4. A data transmission device as claimed in the second Claim, in which each message to be transmitted comprises a number of bits, characterized in that said subdivision into at least two types of messages to be transmitted is based on the length expressed in the number of bits of the message.

5. A data transmission device as claimed in any one of the preceding Claims, characterized in that to each copy of the same message to be transmitted there is added an indication, said indications forming a series composed of at least one first and one second, mutually different indication, a first indication being added uniquely to the first copy of said number of copies and indicating the first copy of said number, and a second indication thereof being uniquely added to the last copy of said number of copies and indicating the last copy of said number.

6. A data transmission device as claimed in Claim 5, characterized in that said indication comprises a copy number, said series comprising a number of elements which equals said integer number of « n » copies to be transmitted, said receiving station comprising a table for taking into account the different numbers.

7. A data transmission device as claimed in Claim 6, characterized in that said copies of the same message to be transmitted are enumerated in a decreasing order, the last copy bearing the lowest number, said receiving station comprising an element for detecting the lowest number, said element being connected to said table.

8. A data communication network, comprising transmitting/receiving stations, each of which is connected to a channel for the transport of data and utilizing a data transmission device as claimed in any one of the preceding Claims.

9. A data communication network as claimed in Claim 8, characterized in that each receiving station comprises a' network-quality counting element for determining a second value which indicates the number of correct and/or incorrect copies of the same message received, an input of said counting element being connected to an output of said decoder.

10. A data communication network as claimed in Claim 9, characterized in that each transmitting stations comprises a weighting element having an output which is connected to said input of the counter and an input which is connected to an output of said network-quality counting element for the reception of said second value representing the number of correct and/or incorrect copies, said weighting element comprising second means for determining, on the basis of said second value, a network error rate for each message to be transmitted, and for deducting therefrom said first value of the adjustment signal.

11. A data communication network as claimed in any one of the Claims 8, 9 or 10, characterized in that said integer number of copies is smaller or equal to ten.

## Patentansprüche

1. Datenübertragungsanordnung mit zumindest einer Sendestation und zumindest einer Empfangsstation, wobei die Sendestation Mittel mit einem Zähler zum Übertragen einer ganzen Zahl von Kopien einer selben Nachricht enthält, und diese Kopien aufeinander folgend ausgestrahlt werden, wobei diese ganze Zahl durch den Zählerstand bestimmt wird, und weiter die Sendestation ebenfalls einen Coder, der jede Nachricht mit einem Fehlererkennungscode ergänzt, und die Empfangsstation sowohl einen Decoder zum Decodieren der empfangenen Nachrichten als auch mit diesem Decoder verbundene Mittel

**0 084 389**

zum Entnehmen nur einer einzigen Kopie aus den empfangenen Kopien derselben Nachricht enthält, die in Übereinstimmung mit einer gegebenen Norm decodiert ist, dadurch gekennzeichnet, dass der Zähler auf eine beschränkte Positionszahl einstellbar ist und einen Eingang zum Empfangen eines Positionierungssignals zum Positionieren des Zählers enthält, wobei dieses Positionierungssignal von der Sendestation bei jeder Übertragung einer Nachricht erzeugt wird und einen ersten Wert hat, der die ganze Zahl der auszustrahlenden Kopien angibt.

2. Datenübertragungsanordnung nach Anspruch 1, dadurch gekennzeichnet, dass die Sendestation ein Gewichtungselement mit einem mit dem Zählereingang verbundenen Ausgang und einen für den Empfang der übertragenden Nachrichten ausgelegten Eingang enthält, wobei das Gewichtungselement mit ersten Mitteln zum Unterteilen der zu übertragenden Nachrichten in zumindest zwei Nachrichtenarten und zum Zuordnen eines ersten Wertes des Positionierungssignals zu jeder Nachrichtenart ausgerüstet ist.

3. Datenübertragungsanordnung nach Anspruch 2, dadurch gekennzeichnet, dass die Unterteilung in zumindest zwei auszusendenden Nachrichtenarten auf dem Funktionsgewicht der Nachricht basiert.

4. Datenübertragungsanordnung nach Anspruch 2, in der jede auszusendenden Nachricht eine Anzahl von Bits enthält, dadurch gekennzeichnet, dass die Unterteilung in zumindest zwei auszusendenden Nachrichtenarten auf der Länge einer Anzahl vom Bits der Nachricht basiert.

5. Datenübertragungsanordnung nach einem oder mehreren der vorangehenden Ansprüche, dadurch gekennzeichnet, dass jeder Kopie der selben auszusendenden Nachricht eine Anzeige zugefügt wird, und diese Anzeigen eine zusammengesetzte Serie aus zumindest einer ersten und einer zweiten untereinander verschiedenen Anzeigen bilden, von denen eine erste Anzeige eindeutig einer ersten Kopie der Anzahl von Kopien zugeordnet wird, wobei die erste Anzeige die erste Kopie dieser Anzahl anzeigt, und von denen eine zweite Anzeige eindeutig einer letzten Kopie der Anzahl von Kopien zugeordnet wird, wobei diese zweite Anzeige die letzte Kopie dieser Anzahl anzeigt.

6. Datenübertragungsanordnung nach Anspruch 5, dadurch gekennzeichnet, dass die genannte Anzeige eine Kopienummer enthält und dass die Serie aus genau so vielen Elementen wie die ganze Zahl « n » von auszusendenden Kopien besteht, wobei die Empfangsstation eine Tabelle für die Berücksichtigung der verschiedenen Nummern enthält.

7. Datenübertragungsanordnung nach Anspruch 6, dadurch gekennzeichnet, dass die Kopien der selben auszusendenden Nachricht zurückzählend numeriert sind, wobei die letzte Kopie die niedrigste Nummer aufweist, und die Empfangsstation mit einem Element für die Detektierung der niedrigsten Nummer ausgerüstet ist, das mit der genannten Tabelle verbunden ist.

8. Datenkommunikationsnetz mit Sende- und Empfangsstationen, die (alle) mit einem Kanal für die Datenübertragung verbunden sind, wobei eine Datenübertragungsanordnung nach einem oder mehreren der vorangehenden Ansprüche verwendet sind.

9. Datenkommunikationsnetz nach Anspruch 8, dadurch gekennzeichnet, dass jede Empfangsstation ein Netzwerkqualitäts-Zählelement zur Bestimmung eines zweiten Wertes enthält, der die Anzahl der guten und/oder fehlerhaften Kopien einer selben empfangenen Nachricht angibt, wobei dieses Zählelement einen mit einem Ausgang des genannten Decoders verbundenen Eingang hat.

10. Datenkommunikationsnetz nach Anspruch 9, dadurch gekennzeichnet, dass jede Sendestation ein Gewichtungselement mit einem mit dem Zählereingang verbundenen Ausgang und einen mit einem Ausgang des genannten Netzwerkqualitäts-Zählelements verbundenen Eingang für den Empfang des genannten zweiten Wertes der Anzahl guter und/oder fehlerhafter Kopien enthält, wobei dieses Gewichtungselement mit zweiten Mitteln zur Bestimmung einer Netzfehlerrate für jede auszusendende Nachricht auf Basis des genannten zweiten Wertes und zum Ableiten des genannten ersten Wertes des Positionierungssignals aus diesem zweiten Wert ausgerüstet ist.

11. Datenkommunikationsnetz nach einem der Ansprüche 8, 9 oder 10, dadurch gekennzeichnet, dass die ganze Zahl von Kopien niedriger als oder gleich zehn ist.

FIG.1

0 084 389

FIG.2

FIG.5

FIG.4

2

FIG.3